# EUROPEAN PATENT APPLICATION

(11) **EP 1 795 996 A2**
(43) Date of publication of application: **13.06.2007**
(21) Application number: 06125440.5
(22) Date of filing: 05.12.2006
(51) Int. Cl.: G06F 3/033

(54) **Display apparatus and user interface menu displaying method**

(30) Priority: 08.12.2005 KR 20050119699
(71) Applicant: Samsung Electronics Co., Ltd., Suwon-si 442-742 Gyeonggi-Do (KR)
(72) Inventor: PAK, Sung-youn, Seoul (KR)
(74) Representative: Robinson, Ian Michael

(57) **Abstract**

The present invention relates to a display apparatus and a user interface menu displaying method. The display apparatus includes: a user interface forming unit (80) which generates a user selecting menu having at least one selecting item; a memory (60) in which history information on an operation of a function corresponding to the selecting item is stored; a user selecting unit (70) for a selection of the user selecting menu; and a controller (90) which controls the user interface forming unit (80) so that the selecting item is arranged according a previous operating sequence based on the history information.

## Description

Apparatuses and methods consistent with the present invention relate to displaying a user interface menu, and more particularly, to a display apparatus on which a plurality of selected items are arranged and displayed, and a user interface menu displaying method.

Generally, there are various kinds of user interface menus for a user in display apparatuses. Recently, various attempts to construct a user interface menu have been made so that a user can conveniently select a necessary function.

Particularly, there has been a trend to introduce a multi-media apparatus capable of playing various media such as a television (TV) broadcast, photographs, music, movies, and the like in one device. This multi-media apparatus requires convenient interface menus to manage the plurality of media and/or contents.

Especially, in a multi-media apparatus, it is necessary to construct user interface menus so that selection and movement between media and/or contents can be efficiently navigated by a user who controls a lot of contents.

According to the present invention there is provided an apparatus and method as set forth in the appended claims. Preferred features of the invention will be apparent from the dependent claims, and the description which follows.

The present invention provides a display apparatus and a user interface menu displaying method through which a user can efficiently and more conveniently navigate a selection menu.

According to an aspect of the present invention, there is provided a display apparatus according to an exemplary embodiment of the present invention comprises: a user interface forming unit which forms a user selecting menu having at least one selecting item; a memory in which history information on an operation of a function corresponding to each of the at least one selecting item is stored; a user selecting unit for a selection of the user selecting menu; and a controller which controls the user interface forming unit so that the selecting item is arranged according a previous operating sequence based on the history information.

The selecting item may comprise at least one sub item; and the controller may control the user interface forming unit so that the sub item of the at least one selecting item is arranged according to a previous operating sequence based on the history information when one of the selecting items is selected through the user selecting unit.

The at least one selecting item may be arranged along a first axis, while the at least one sub item is arranged along a second axis, where the second axis intersects with the first axis at the at least one selection item comprising the at least one sub item.

At least one sub item may comprise at least one second sub item arranged along a third axis, where the third axis intersects with the second axis at the at least one sub item comprising the at least one second sub item.

The at least one second sub item may be divided into left side items and right side items or into upper side items and lower side items along the third axis according to whether the second sub items have been previously operated.

The user selecting menu may further comprises one or more of a plurality of different multi-media sources and a plurality of contents.

According to another aspect of the present invention, there is provided a display apparatus, according to another exemplary embodiment of the present invention comprises: a user interface forming unit which forms a user interface menu comprising a plurality of first content level items; a memory in which history information on an operation of the first content level items is stored; a user selecting unit for a selection of the user interface menu; and a controller which controls the user interface forming unit so that the plurality of first level content items are arranged according a previous operating sequence based on the history information.

At least one first level content item comprises at least one second level content item; and the controller controls the user interface forming unit so that the at least one second level content item is arranged according to a previous operating sequence based on the history information when one of the first level content items is selected through the user selecting unit.

The plurality of first level content items are arranged along a first axis, and the at least one second level content item is arranged along a second axis, where the second axis intersects with the first axis at the at least one first content item comprising the at least one second content item.

At least one second level content item may comprise at least one third level content item arranged along a third axis, wherein the third axis intersects with the second axis at the at least one second level content item comprising the at least one third level content item.

Content items of each subsequent level are arranged along an axis intersecting with an axis of the higher level.

The third level content items may be divided into left side items and right side items according to whether the third level content items have been previously operated or may be divided into upper side items and lower side items according to whether the third level content items have been previously operated.

The user interface menu may further comprise a selecting item which causes the user interface menu to return to one of a selecting menu of a higher level and a higher level multi-media source.

According to another aspect of the present invention, there is provided a method of displaying a user interface menu for a selection of a plurality of different multi-media sources, according to a third exemplary embodiment of the present invention comprises: storing history information on an operation of a plurality of multi-media sources; and arranging each of the multi-media sources according to a previous operating sequence based on the history information when a function of displaying the user interface menu is selected.

At least one multi-media may comprise at least one first level content item; and the method further may further comprise arranging the at least one first level content item according to a previous operating sequence based on history information when one of the multi-media sources is selected.

The first level content item may comprise at least second level content item; and the method may further comprise arranging the second level content items according to a previous operating sequence based on history information when one of the first level content items is selected.

The first level content items may be arranged along a first axis, while the second level content items are arranged along a second axis, where the second axis intersects with the first axis at the at least one first level content item comprising the at least one second level content item.

The second level content item comprises at least one third level content item, and the method further comprises arranging the third content item along a third axis, wherein the third axis intersects with the second axis at the second level content item.

Content items of each level may be divided into right and left side items based on whether the items have been previously operated, or may be divided into upper and lower items based on whether the items have been previously operated, in accordance with the direction of the axis along which they are arranged.

The user interface menu may further comprise a selecting item which causes the user interface menu to return to a higher content level.

The above and other aspects of the present invention will become apparent and more readily appreciated from the following description of the exemplary embodiments, taken in conjunction with the accompanying drawings of which:
Figure 1 is a control block diagram of a display apparatus according to an exemplary embodiment of the present invention;
Figures 2A and 2B are images of a user interface menu according to an exemplary embodiment of the present invention; and
Figure 3 is a flowchart illustrating a method of displaying a user interface menu according to an exemplary embodiment of the present invention.

Reference will now be made in detail to the exemplary embodiments of the present invention, examples of which are illustrated in the accompanying drawings, wherein like reference numerals refer to like elements throughout.

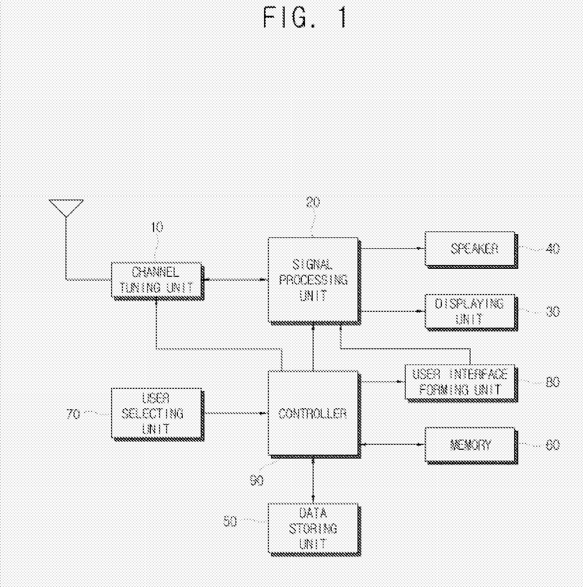

As shown in Figure 1, a display apparatus according to an exemplary embodiment of the present invention comprises a channel tuning unit 10, a signal processing unit 20, a displaying unit 30, a speaker 40, a data storing unit 50, a memory 60, a user selecting unit 70, a user interface forming unit 80 and a controller 90.

The channel tuning unit 10 tunes a broadcasting signal having a frequency range corresponding to a tuning control signal of the controller 90 described below. Herein, the channel tuning unit 10 may comprise a tuner or a plurality of tuners tuning a broadcasting signal received through an antenna, and a demodulator outputting the tuned signal by a format of transport stream after a vestigial side band (VSB) demodulating process, an error correction process, etc. are performed.

A digital broadcasting signal of the tuned channel is processed by the signal processing unit 20 and then is displayed on the displaying unit 30. The signal processing unit 20 may comprise various additional functions corresponding to each format of input image signals: for example, an analog to digital (A/D) converting function and a digital decoding function converting each image signal of various input formats into digital image signals of predetermined formats; a scaling function converting the input image signal adaptively to a vertical frequency; a resolution and an aspect ratio meeting display standards of the displaying unit 30 after receiving a digital image signal; and a predetermined format converting function. The signal processing unit 20 processes an image signal stored in the data storing unit 50 as well as a broadcasting signal to display the image signal on the displaying unit 30. This data storing unit 50 will be described below.

The displaying unit 30 according to an embodiment of the present invention may be applied to various types of display modules such as a digital light processor (DLP), a liquid crystal display (LCD), a plasma display panel (PDP), and so on.

Each audio signal in a broadcasting signal and stored in the data storing unit 50 described below is processed through a decoding operation and/or the like performed by the signal processing unit 20 and then is output to the speaker 40.

The data storing unit 50, according to an exemplary embodiment of the present invention, in which contents of at least one multi-media source are stored, may be realized with a storing device such as a hard disk and the like. Herein, the data storing unit 50 may store various contents such as music, movies, recordings, electronic program guide (EPG) information, and the like.

The controller 90 described below controls information to be stored in the memory 60 where history information related to operations of above-described broadcasting, multi-media sources and/or contents is stored. The history information may comprise one or more of information on a previous operating time of a multi-media source and/or content, information on an operating sequence, and an update of a multi-media source or content.

The user selecting unit 70, which is designed for selecting a user interface menu and items included in the user interface menu, may comprise menu-keys on a remote-controller and a key-signal generating unit generating a key-signal corresponding to a key manipulation. Here, the user selecting unit 70 may be a mouse or a keyboard or the like, or may be on a main panel of the display apparatus.

The user interface forming unit 80 according to an exemplary embodiment of the present invention may be realized with an on-screen display (OSD) generating integrated circuit (IC) and the like to form a user interface menu for a user's selection. A user interface menu formed by the user interface forming unit 80 is processed through a scaling operation performed by the signal processing unit 20 and then is displayed on the displaying unit 30.

At this time, the user interface menu formed by the user interface forming unit 80 may comprise a plurality of selecting items for a user's selection. If the user interface menu is designed for a multi-media source's selection or a content's selection and a user's selection, the present invention can be applied to all user interface menus.

Hereinbelow, the present invention employing a menu for a selection of a multi-media source and a content thereof as an example of a user interface menu will be described.

The controller 90, which may be a central processing unit (CPU), a microcomputer, or the like, controls the user interface forming unit 80 to arrange selecting items according to a previous operating sequence, based on history information, which is stored in the memory 60, on an operation of a multi-media source and/or a content. Also, when a multi-media source and/or a content item are selected through the user selection unit 70, the controller 90 controls the selected component so that the selected content can be operated. For example, when a TV function is selected through the user selection unit 70, the controller 90 controls the channel tuning unit 10 so that the selected channel can be tuned through the channel tuning unit 10, and a TV screen is displayed on the displaying unit 30.

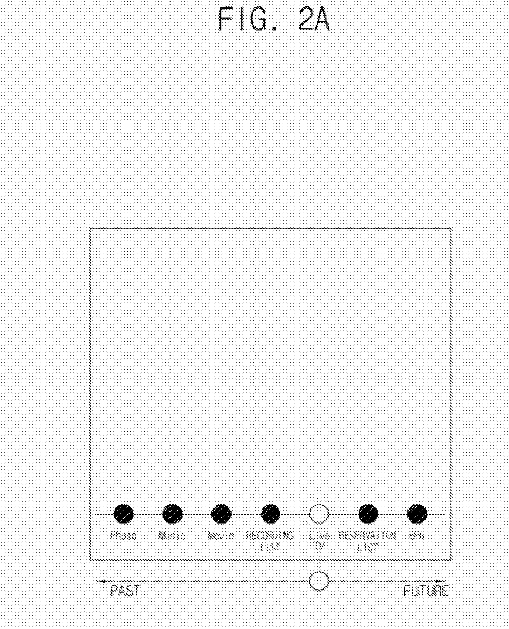

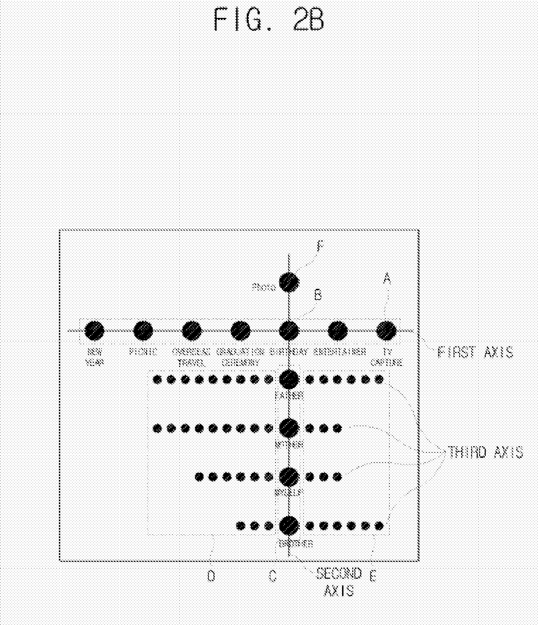

A displaying screen of a user interface menu for a selection of a multi-media source and a content thereof according to an exemplary embodiment of the present invention will be described with reference to Figures 2A and 2B.

Figure 2A is a displaying screen when a user selects a user interface menu through the user selection unit 70 while watching TV. Figure 2B is a displaying screen when an item 'photo' of displayed multi-media sources displayed in Figure 2A is selected.

As shown in Figure 2A, when a user interface menu is selected through the user selecting unit 70 while watching TV, the controller 90 controls the user interface forming unit 80 to form a user interface menu having a plurality of selecting items corresponding to a multi-media source. At this time, the user interface menu may be displayed on a full screen or compositely on a part of the TV screen on which images are currently displayed. The signal processing unit 20 scales the size and processes the displaying location of a user interface menu screen according to a previous setting-up value.

The controller 90 detects history information on a multi-media source and a content, which are stored in the memory 60, and controls the user interface forming unit 80 to arrange selecting items corresponding to a previous operating sequence. For example, as shown in Figure 2A, in the center of the current-selected item 'TV', the media sources operated in the past are shown at the left side of the current-selected item 'TV' and the future media sources to be operated are shown at the right side. Specifically, each of the media sources to be operated in the future may be arranged according to an updated sequence. If a user selects a user interface menu again after selecting the item 'photo', the user interface menu will be divided into a past multi-media source and a future multi-media source based on the item 'photo' at the center and arrange in time sequence. Accordingly, a user can directly distinguish a previous-operated source and a future-operating source at once.

At this time, if a user selects the item 'photo' among the selecting items by manipulating the user selecting unit 70, the screen is converted like Figure 2B. The controller 90 controls the user interface forming unit 80 to arrange the content items (A) belonged to the item 'photo' in the first axis according to a previous-operated sequence, based of history information on the content stored in the memory 60.

For example, as shown in Figure 2B, the current-operated item is the item 'Birthday' (B), and the sequence of the arranged items in the left side from 'B,' that is, 'graduation ceremony', 'overseas travel', 'picnic' and 'new year,' are the time sequence of the contents items operated in the past. Also, the arranged items in the right side from 'B', that is, 'entertainer' and 'TV capture' are the content items not yet operated. The cursor's location may be set up at the content item operated in the previous screen.

When a content item on which a cursor is currently locates and/or a content item selected by the user selecting unit 70 comprises a lower content item thereof, the lower content items are arranged in a second axis direction different from the first axis according to a time operating sequence. For example, when a cursor is located on the item 'birthday' (B) that comprises a lower content items thereof, the lower content items belonging to the item 'birthday' (B), that is, the content lower items (C) of 'father', 'mother', 'myself' and 'brother', are arranged based on the upper item 'birthday', in the second axis direction perpendicular to the first axis. Here, the arranged sequence of the lower content items (C) is the previous operation time sequence, and a current content among the lower content items (C) in Figure 2B is displayed above an older content. At this time, a user moves a selecting item or a highlight by manipulating the user selecting unit 70, thereby selecting a necessary content.

Also, when a lower content comprises a second lower content thereof, as shown in Figure 2B, the second lower content in regions (D) or (E) is arranged in a new third axis direction which is formed with regard to the corresponding lower content. Here, the second lower contents (D) and (E) are arranged in a time operating sequence. In Figure 2B, the items (D) operated in the past are arranged at the left, and the items (E) to be operated in the future are arranged at the right. Thus, by selecting a content item, a user can recognize contents of not only one lower phase but also two lower phases at one glance and can instinctively perceive whether a selected content was operated or not.

At this time, if a user move a cursor through the user selecting unit 70, the second and third axis are changed, and the lower content items and/or the second lower items are changed and displayed according to a selected item. Thus, a user can recognize a location of a desired content item at once and move to a desired content without difficulty.

The foregoing embodiment of the present invention has been described in the case that when the cursor is located in the item 'birthday', the second lower contents arranged in a third axis direction are displayed. However, if the cursor is located in the item 'father' or 'mother', as the lower content items of the very upper content items, only the second lower content items corresponding to the item 'father' or 'mother' are arranged.

Also, as shown in Figure 2B, by locating the upper selecting item of the item 'photo' (F) at the extended second axis, a user can return to the upper item without difficulty. For example, if a user selects the item (F) in the screen of the Figure 2B, the screen is converted to the upper menu, Figure 2A.

In addition, the movement of a cursor may be shown by various methods including highlighting, selecting an item, or moving a highlighted item, etc.

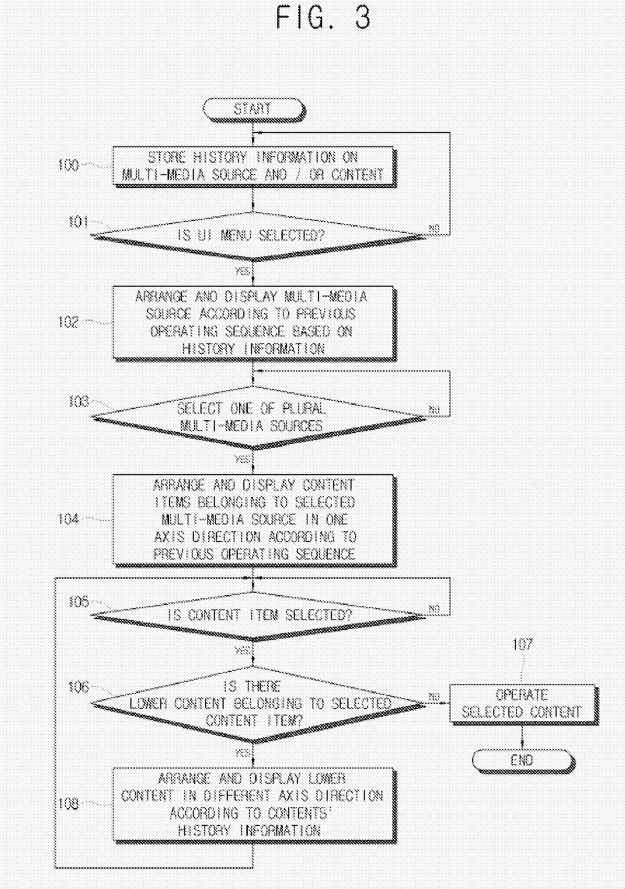

A displaying method of a user interface menu according to an exemplary embodiment of the present invention will be described with reference to Figure 3.

When a multi-media source and/or a content are operated, the controller 90 allows history information to be stored in the memory 60 (operation 100). As described above, the history information comprises update information.

If a user interface (UI) menu for a selection of a multi-media source and/or a content is selected through the user selecting unit 70 (operation 101), the controller 90 detects history information stored in the memory 60 and controls the user interface forming unit 80 to arrange a multi-media source according to a previous operating sequence and to display the source on the displaying unit 30 (operation 102). The corresponding displaying screen may be the same as shown in Figure 2A.

At this time, if one of a plurality of multi-media sources displayed on a user interface menu is selected through the user selecting unit 70 (operation 103), the controller 90 controls the user interface forming unit 80 so that content items belonging to the selected multi-media source can be arranged in one axis direction, that is a first axis direction (operation 104). At this time, the controller 90 allows the content items to be arranged and displayed according to a previous operating sequence based on content history information stored in the memory 60 (operation 104). The corresponding displaying screen may be the same as shown in Figure 2B.

If one of content items on a first axis is selected through a user selecting unit 70 (operation 105), the controller 90 determines whether or not there is any lower content belonging to the selected content item (operation 106). If there is no lower content belonging to the selected content item, the controller 90 controls the selected content to be operated (operation 107).

In the meanwhile, if there is a lower content belonging to the selected content item, the controller 90 controls the user interface forming unit 80 so that the lower content can be arranged and displayed in a different axis direction, that is a second axis direction (operation 108). As described above, the controller 90 controls the user interface forming unit 80 so that the lower content can be arranged according to the contents' history information (operation 108).

At this time, if a user selects one of the lower contents (operation 105), operations 106 through 108 will be repeated. That is, according to whether or not a selected lower content item comprises a second lower content item thereof, the second lower content item may be arranged in a new axis direction.

However, as described above in Figures 2A and 2B, when a content item is selected, it is natural that a second and a third axis are formed at once, and a lower item thereof and/or a second lower item thereof as well as the content item can be simultaneously displayed. Thus, the content item is displayed according to a displaying method of arranging in operation sequence, and other various displaying methods can be variously realized.

Also, the foregoing embodiment of the present invention has been described with reference to an example of displaying the contents belonging to the selecting item in a first, a second and a third axis direction by each category in multi-steps when one of the selecting items of a media source is selected. However, it is possible that a selecting item of a media source is displayed in a first axis direction, and a content belonging to the selecting item is arranged in a second or third axis direction. As described above, a displaying of a content may be displayed according to or without respect to whether or not a user selecting unit selects.

As described above, according to the present invention, there is provided a display apparatus through which a user can navigate a selecting menu including a user interface menu more conveniently, and a user interface menu displaying method.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a user interface forming unit (80) which generates a user selecting menu, comprising at least one selecting item;
a memory (60) in which history information on an operation of a function corresponding to the selecting item is stored;
a user selecting unit (70) which selects the selecting item of the user selecting menu; and
a controller (90) which controls the user interface forming unit (80) so that the selecting item is arranged according a previous operating sequence based on the history information.

2. The display apparatus according to claim 1, wherein the user selecting menu comprises a plurality of selecting items and each of the selecting items comprises at least one first sub-item; and
the controller (90) controls the user interface forming unit (80) so that the first sub-item of the selecting item is arranged according to the previous operating sequence based on the history information if the selecting item is selected through the user selecting unit (70).

3. The display apparatus according to claim 2, wherein the selecting item is arranged along a first axis, and the first sub-item is arranged along a second axis, wherein the second axis intersects the first axis at the selecting item if the selecting item is selected by the user selecting unit (70).

4. The display apparatus according to claim 3, wherein the first sub-item comprises at least one second sub-item; and
the second sub-item is arranged along a third axis, wherein the third axis intersects with the second axis at the first sub-item if the first sub-item is selected by the user selecting unit (70).

5. The display apparatus according to claim 3, wherein the first sub-item comprises at least one second sub-item; and
the second sub-item is arranged along a third axis, wherein the third axis intersects with the second axis at the first sub-item.

6. The display apparatus according to claim 4 or 5, wherein the first sub-item comprises a plurality of second sub-items which are divided into left side items, and right side items according to whether the second sub-items have been previously operated.

7. The display apparatus according to claim 4 or 5, wherein the first sub-item comprises a plurality of second sub-items which are divided into upper side items and lower side items according to whether the second sub-items have been previously operated.

8. The display apparatus according to any preceding claim, wherein the user selecting menu comprises a menu comprising items representing at least one of a plurality of different multi-media sources and a plurality of contents.

9. A display apparatus comprising:
a user interface forming unit (80) which generates a user interface menu, comprising a plurality of first level content items;
a memory (60) in which history information on an operation of each of the plurality of first level content items is stored;
a user selecting unit (70) which selects an item from the user interface menu; and
a controller (90) which controls the user interface forming unit (80) so that the plurality of first level content items are arranged according a previous operating sequence based on the history information.

10. The display apparatus according to claim 9, wherein each of the first level content items comprises at least one second level content item; and
the controller (90) controls the user interface forming unit (80) so that the second level content item is arranged according to a previous operating sequence based on the history information if a first level content item of the first level content items is selected through the user selecting unit (70).

11. The display apparatus according to claim 10, wherein the first level content item is arranged along a first axis, and the second level content item is arranged along a second axis wherein the second axis intersects the first axis at the first level content item if the first level content item is selected by the user selecting unit (70).

12. The display apparatus according to claim 11, wherein the second level content item comprises at least one third level content item, wherein the third level content item is arranged along a third axis, wherein the third axis intersects with the second axis at the second level content item if the second level content item is selected by the user selecting unit (70).

13. The display apparatus according to claim 11, wherein content items of each subsequent level are arranged along an axis intersecting with an axis of the higher level.

14. The display apparatus according to claim 12 or 13, wherein content items of each level are divided into right and left side items based on whether the items have been previously operated, or are divided into upper and lower items based on whether the items have been previously operated, in accordance with the direction of the axis along which they are arranged.

15. The display apparatus according to claim 12, 13 or 14, wherein the user interface menu further comprises a selecting item which causes the user interface menu to return to one of a selecting menu of a higher level and a higher level multi-media source.

16. A method of displaying a user interface menu for a selection of a plurality of different multi-media sources, the method comprising:
storing history information on an operation of the multi-media sources; and
arranging each of the multi-media sources according to a previous operating sequence based on the history information if a function of displaying the user interface menu is selected.

17. The method according to claim 16, wherein the multi-media source comprises at least one first level content item; and
the method further comprises arranging the first level content item corresponding to the multi media source according to the previous operating sequence based on the history information if one of the multi-media sources is selected.

18. The method according to claim 17, wherein first level content item comprises at least one second level content item; and
the method further comprises arranging the second level content item according to the previous operating sequence based on the history information if the first level content item is selected.

19. The method according to claim 18, wherein the first level content item is arranged along a first axis, and the second level content item is arranged along a second axis, wherein the second axis intersects with the first axis at the first level content item.

20. The method according to claim 19, wherein the second level content item comprises at least one third level content item, and the method further comprises arranging the third content item along a third axis, wherein the third axis intersects with the second axis at the second level content item.

21. The method according to claim 20, wherein content items of each level are divided into right and left side items based on whether the items have been previously operated, or are divided into upper and lower items based on whether the items have been previously operated, in accordance with the direction of the axis along which they are arranged.

22. The method according to claim 21, wherein the user interface menu comprises a selecting item which causes the user interface menu to return to one of a selecting menu of a higher level and a higher level multi-media source.
